# EUROPEAN PATENT APPLICATION

(11) **EP 1 829 456 A1**
(43) Date of publication of application: **05.09.2007**
(21) Application number: 07380060.9
(22) Date of filing: 05.03.2007
(51) Int. Cl.: A23L 1/333, A23B 4/00

(54) **Procedure for packaging preserved bivalve molluscs and preserved product thus produced**

(30) Priority: 03.03.2006 ES 200600523
(71) Applicant: Conservas Selectas Mar de Couso, S.A., 15965 Aguiño - Riveira, La Coruña (ES)
(72) Inventor: Fernandez Sanles, Juan Luis, 15965 Aguino - Riveira (La Coruna) (ES)
(74) Representative: Carpintero Lopez, Francisco

(57) **Abstract**

The invention provides a procedure for packaging preserved bivalve molluscs, which comprises the following steps: (a) placing the bivalve molluscs with their shells in a suitable container, and (b) subjecting said container to a heat treatment at a temperature of 110-121 °C, wherein during step (a) the ratio between the weight of mollusc and nominal volume of the container is controlled so that the molluscs are packaged with their shells partially open without the meat becoming detached from the shell. Said procedure is simple and economical, making it possible to produce preserved products of a high organoleptic quality with a good visual appearance. The invention also provides preserved bivalve molluscs with their shells partially open, simply boiled or cooked with a suitable sauce, produced by this procedure.

## Description

### FIELD OF THE INVENTION

The present invention relates to the field of packaging preserved bivalve molluscs. More particularly, it relates to a procedure for packaging preserved bivalve molluscs with their shells partially open and to the preserved product thus produced. Said procedure comprises the steps of placing the bivalve molluscs with their shells into a suitable container and controlling the ratio between the weight of mollusc and nominal volume of the container, then subjecting them to a suitable heat treatment in order to produce preserved bivalve molluscs with their shells partially open. This method, which is simple and economical, makes it possible to produce preserved products of a high organoleptic quality with a good visual appearance.

### BACKGROUND OF THE INVENTION

The increasing market presence of foods preserved in glass jars makes it necessary to create high quality products that, at the same time, present an attractive appearance to consumers, who are becoming increasingly tired of always seeing the same products on the shelves.

At present the most usual method of packaging bivalve molluscs is to previously cook the molluscs, open them and remove the shell before packaging them. Therefore, conventionally, after adequately cleaning the molluscs, they are cooked in hot water or steam at a temperature of around 95 °C and, after said cooking step, the shells are removed and they are packaged.

However, said process involves a number of disadvantages: it is a complex process that involves a high use of energy and a long processing time; there is a danger of bacterial contamination when the molluscs are handled, especially when the shells are removed after cooking; and the process is detrimental to the organoleptic quality of the final product, as the cooking juices of the molluscs are wasted.

Methods have also been developed in the state of the art for packaging bivalve molluscs with the shell completely closed. Patent ES 2016056 discloses a process for producing bivalves in their natural juices by keeping the valves closed while cooking using a mechanical securing device that consists of individual flexible clips for each mollusc arranged on stackable trays. After cooking and keeping their valves closed, the product is chilled, frozen and then packaged. Said securing device has been improved as disclosed in patents of addition ES 2032172 and ES 2097098. ES 2032172 discloses a box with grooves or holes in the walls and base with a lid containing helical springs on its lower face that press on the molluscs and prevent the valves from opening during cooking due to the action of an external means of fastening. In ES 2097098 the molluscs are packaged in suitable containers that are hermetically vacuum sealed so that the valves remain closed during cooking and subsequent freezing before the product is sold. Said processes aim to prevent the drawbacks of freezing raw molluscs, mainly the disintegration of the meat after defrosting and subsequent cooking.

Patent ES 2018017 discloses a procedure for treating and packaging mussels or other bivalve molluscs wherein they are arranged in a packaging made from a flexible material, which is shrunk by applying vacuum and heat to keep the shells substantially closed. Subsequently, the package and the bivalves are heated for a certain time at a sufficient temperature to at least partially cook the bivalves. Furthermore, patent ES 2093564 discloses a procedure for cooking seafood, which, after adequate cleaning, are dosed and packaged in plastic bags that are hermetically vacuum sealed and subjected to a controlled pressure cooking stage so that the pressure outside is greater than the pressure generated inside in order to thus prevent the shells from opening during cooking. However, said processes involve producing bivalve molluscs with the shell completely closed, which gives the impression that they are not properly cooked or that the molluscs are in a poor state.

So there continues to be a need in the state of the art to provide an alternative procedure for packaging preserved bivalve molluscs that provides an attractive product to consumers, with a high organoleptic quality and fewer risks of contamination due to handling.

The present inventors have discovered that, by calculating the ratio between the weight of raw material to be packaged and the volume of the container prior to heat treatment, it is possible to produce ready-to-eat preserved bivalve molluscs, whose shells are partially open to an extent that the visual appearance of the final product is excellent. The molluscs are therefore packaged without giving the impression that they are not cooked or are in a poor state. Moreover, by calculating the appropriate opening of the shell it is possible to prevent the cooked meat from becoming detached and being lost in the packaging liquid, therefore making it seem as if many of the shells are empty. What is more, by optimising this opening it is possible to prevent the shells from occupying too much space inside the container and therefore giving the impression of a lack of product. Finally, it makes it possible to save on packaging and packing, as the final yield of the raw material can be accurately established.

Other advantages of the procedure of the invention are the saving in terms of energy and processing time, as it is not necessary to subject the molluscs to a heat process to force them open prior to packaging, and the improved organoleptic quality of the product, as the cooking juices of the molluscs are not wasted and the double cooking thereof during opening and cooking can be avoided, as has been mentioned above.

### OBJECT OF THE INVENTION

The object of the present invention is therefore to provide a procedure for packaging preserved bivalve molluscs, wherein as the molluscs are placed in the container the ratio between the weight of mollusc and the nominal volume of said container is controlled, so that the molluscs are packaged with the shell partially open.

Another object of the invention is to provide the preserved bivalve molluscs with their shells partially open thus produced.

### BRIEF DESCRIPTION OF THE FIGURES

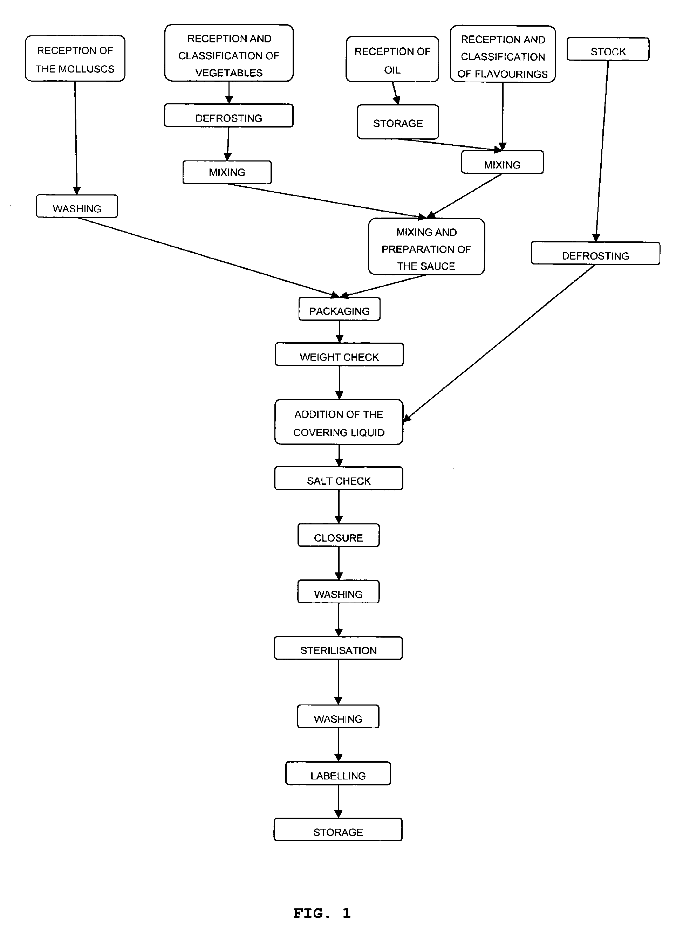

Figure 1 shows a diagram of a preferred embodiment of the procedure of the invention, wherein the bivalve molluscs are put into a container together with a suitable sauce prior to the heat treatment in order to produce preserved bivalve molluscs with their shells partially open that are cooked in a suitable sauce.

### DESCRIPTION OF THE INVENTION

The present invention provides a procedure for packaging preserved bivalve molluscs, which comprises the following steps:
(a) placing bivalve molluscs with their shells in a suitable container, and
(b) subjecting said container to a heat treatment at a temperature of 110-121 °C,
wherein during step (a) the ratio between the weight of mollusc and nominal volume of the container is controlled so that the molluscs are packaged with their shells partially open, hereinafter referred to as the "procedure of the invention".

In the context of the invention, the expression "shell partially open" refers to the fact that the shell is sufficiently open without the meat becoming detached from the shell. More particularly, it refers to a degree to which the shell opens so that there is a distance of between 5 and 15 mm between the valves.

In the context of the invention, the expression "packaging preserved bivalve molluscs" refers to adequately preparing said molluscs, packaging them hermetically and subjecting them to a heat process to preserve them for a suitable storage time. The procedure of the invention therefore comprises producing preserved bivalve molluscs that are simply boiled or cooked with a suitable sauce.

Therefore, in a particular embodiment, the procedure of the invention optionally comprises an additional step of adding sauce prior to the heat treatment of step (b).

Said sauce will be a conventional sauce that is suitable for the bivalve mollusc being packaged. Therefore, for example, the procedure of the invention could be used to package clams in seafood sauce. Said sauce is prepared prior to adding it to the container in which the molluscs have previously been placed. It is prepared by mixing suitable ingredients, e.g. vegetables, oil and flavourings. The vegetables could be frozen vegetables that are defrosted and chopped and/or minced before adding them to the mixture of flavourings and oil. Vegetables that can be used include onion, garlic, parsley, etc. Flavourings that can be used can be chosen from pepper, paprika, lemon juice, chilli, white wine, etc. Also, the oil used can be chosen from olive oil, sunflower oil, soya oil, etc.

Lastly, the container is filled, adding a covering liquid that can be water, oil, stock (e.g. fish stock) or sauce up to the weight or volume specified for each container.

Containers of several volumes (250, 270, 520, 640, 840 and 950 ml) were used to calculate the ratio between the weight of mollusc to be packaged and the nominal volume of the container used. Different quantities of molluscs were packaged in each format and they were then sterilised, subsequently checking the degree to which the clams had opened and the number of clams completely closed and completely open. The range of weight/volume percentages was limited to an interval of between 0.70 and 0.85, as it was considered that below 0.70 the container gave the impression of not being very full, and above 0.85 it was impossible to package.

Therefore, in a particular embodiment of the procedure of the invention, in step (a) bivalve molluscs with their shells are placed in the container in a ratio of the weight of mollusc and nominal volume of the container of 0.70-0.85.

After performing sterilisation tests, it was confirmed that in all the containers, regardless of their shape, the optimum ratio between the weight of packaged raw material and nominal volume of the packaging was 0.777 ± 0.004 (77.77% ± 0.4% of raw material), establishing for mass production a percentage of packaged raw material of 77% ± 1% of the nominal volume of the packaging.

In a preferred embodiment of the procedure of the invention, in step (a) bivalve molluscs with their shells are placed in the container in a ratio of the weight of mollusc and nominal volume of the container of 0.77.

After placing the bivalve molluscs with their shells in the suitable container in the aforementioned ratio, with or without sauce, the container is closed. This can be, e.g. vacuum sealed by injecting a jet of steam.

Said container is then subjected to a heat treatment at a temperature of 110-121 °C, as has been mentioned above. In a particular embodiment of the procedure of the invention, the container is subjected to a temperature of 115 °C during the heat treatment of step (b).

Said treatment is carried out for the time needed to achieve commercial sterilisation according to the volume and format of the packaging used. In another particular embodiment of the procedure of the invention, the heat treatment of step (b) is carried out for 35-45 min. In a preferred embodiment, said heat treatment of step (b) is carried out for 40 min.

During the heat treatment of step (b) the product is sterilised and cooked, and this can be carried out in any conventional device known in the state of the art. For example, said heat treatment can be carried out in a steam autoclave with a water spray system. During sterilisation, air is let into the autoclave to achieve a positive pressure (1.6-1.8 bar) in order to prevent the container from breaking or deforming due to the pressure of the steam from inside it. Said sterilisation process ends with a controlled chilling of the product inside the autoclave, until it reaches a final temperature of less than 40° C, said chilling being gradual in order to prevent the containers from breaking or deforming due to thermal shock.

The bivalve molluscs must normally be subjected to a cleaning step prior to packaging. Once purged, they are subjected to any conventional cleaning process, e.g. external washing with water to remove any remains of sand and mud stuck to the shells.

Therefore, in another particular embodiment, the procedure of the invention comprises an additional step in which the molluscs are cleaned prior to step (a).

The preserved bivalve molluscs to be packaged using the procedure of the invention can be any type of typical bivalve mollusc, e.g. clams, cockles or razor clams.

In the procedure of the invention any conventional rigid container that is suitable for packaging bivalve molluscs can be used.

Therefore, in a particular embodiment of the procedure of the invention, the container used in step (a) is a glass container or a metal container.

In a preferred embodiment, the container used in step (a) is a glass jar. In another preferred embodiment, the container used in step (a) is a metal tin. In another preferred embodiment, the container used in step (a) is a metal can.

Another aspect of the invention provides preserved bivalve molluscs with their shells partially open produced by the above-described procedure of the invention.

### PREFERRED EMBODIMENT OF THE INVENTION

Figure 1 shows a block diagram of a preferred embodiment of the procedure of the invention, wherein the bivalve molluscs are placed in the container together with a suitable sauce prior to the heat treatment.

Therefore, after reception of the molluscs they are washed before being packaged in the chosen container. Meanwhile, the vegetables, which were previously in storage, are defrosted, chopped and/or minced if necessary (not shown) and mixed. Similarly, the oil is taken from the place in which it was previously stored and is mixed with the flavourings, thus preparing the sauce together with the previous mixture of vegetables. Said sauce is added to the container in which the molluscs have been placed. Subsequently the weight of the container is controlled and the covering liquid is added up to the weight specified for said container. Stock, e.g. fish stock, which has been prepared beforehand, is used as the covering liquid.

Before closing the container the salt content is checked. Once closed, the container is washed and subjected to sterilisation. Subsequently, it is washed again, labelled and then stored.

An example illustrating the procedure of the invention is presented below to provide a better understanding of the invention and in no case must it be considered to limit the scope of the invention.

### EXAMPLE 1

### Packaging of clams in seafood sauce in glass jars according to the procedure of the invention

Once the previously purged clams have arrived at the packaging plant, they are externally washed with water in order to remove any remains of sand and mud stuck to the shells.

The clean clams are then placed in 840 ml glass jars. A seafood sauce made from onion, olive oil and garlic flavouring is then added to said jars.

It is then filled with a covering liquid consisting of fish stock up to the specified volume.

After filling, the glass jars are closed, vacuum sealing them by means of a jet of steam.

The glass jars containing the clams and the seafood sauce were then sterilised by a heat treatment in a steam autoclave with a water spray system at a temperature of approximately 115 °C, for approximately 40 min. During sterilisation, air was let into the autoclave to achieve a positive pressure of approximately 1.8 bar in order to prevent the container from breaking due to the pressure of the steam from inside it.

Finally, after the sterilisation process the jars were gradually chilled inside the autoclave until they reached a final temperature of less than 40° C.

Thus it was possible to produce ready-to-eat preserved clams in seafood sauce with their shells partially open, which were visually attractive to consumers and presented improved organoleptic properties by retaining the cooking juices of the clams and preventing the double cooking thereof during opening and cooking. Said preserved product also presented guarantees with regard to its sterilisation and absence of bacterial contamination.

Despite having made reference to a specific embodiment of the invention, it is obvious to a person skilled in the art that the described procedure can have numerous variations and modifications, and that all the details mentioned above can be replaced by other technical equivalents whilst adhering to the scope of protection defined in the attached claims.

## Claims

1. Procedure for packaging preserved bivalve molluscs, which comprises the following steps:
(a) placing bivalve molluscs with their shells in a suitable container, and
(b) subjecting said container to a heat treatment at a temperature of 110-121 °C,
**characterised in that** during step (a) the ratio between the weight of mollusc and nominal volume of the container is controlled so that the molluscs are packaged with their shells partially open without the meat becoming detached from the shell.

2. Procedure according to claim 1, **characterised in that** it comprises an additional step in which sauce is added prior to step (b).

3. Procedure according to any of claims 1 or 2, **characterised in that** in step (a) the bivalve molluscs with their shells are placed in the container in a ratio of the weight of mollusc and nominal volume of the container of 0.70-0.85.

4. Procedure according to claim 3, **characterised in that** the ratio between the weight of mollusc and nominal volume of the container is 0.77.

5. Procedure according to any of claims 1 or 2, **characterised in that** in the heat treatment in step (b) the container is subjected to a temperature of 115°C.

6. Procedure according to any of claims 1 or 2, **characterised in that** the heat treatment in step (b) is carried out for 35-45 min.

7. Procedure according to claim 6, **characterised in that** the heat treatment in step (b) is carried out for 40 min.

8. Procedure according to any of claims 1 or 2, **characterised in that** it comprises an additional step prior to step (a) in which the molluscs are cleaned.

9. Procedure according to any of claims 1 or 2, **characterised in that** the molluscs are chosen from clams, cockles and razor clams.

10. Procedure according to any of claims 1 or 2, **characterised in that** the container used in step (a) is a glass or metal container.

11. Procedure according to claim 10, **characterised in that** the container used in step (a) is a glass jar.

12. Procedure according to claim 10, **characterised in that** the container used in step (a) is a metal tin.

13. Procedure according to claim 10, **characterised in that** the container used in step (a) is a metal can.

14. Preserved bivalve molluscs with their shells partially open that can be produced by the procedure of claims 1-13.
